# EUROPEAN PATENT SPECIFICATION

(11) **EP 3 594 294 B1**
(45) Date of publication and mention of the grant of the patent: **16.12.2020**
(21) Application number: 19184900.9
(22) Date of filing: 08.07.2019
(51) Int. Cl.: C09D 11/322

(54) **INKJET INK AND INKJET RECORDING SYSTEM**
TINTENSTRAHLTINTE UND TINTENSTRAHLAUFZEICHNUNGSSYSTEM
ENCRE À JET D'ENCRE ET SYSTÈME D'ENREGISTREMENT À JET D'ENCRE

(30) Priority: 10.07.2018 JP 2018130601
(43) Date of publication of application: 15.01.2020
(73) Proprietor: KYOCERA Document Solutions Inc., Osaka-shi, Osaka (JP)
(72) Inventor: OZAWA, Noriaki, Osaka-shi, Osaka 540-8585 (JP)
(74) Representative: Viering, Jentschura & Partner mbB Patent- und Rechtsanwälte

(56) References cited:
- EP-A1- 2 230 281
- EP-A1- 2 628 776

## Description

### BACKGROUND

The present disclosure relates to an inkjet ink and an inkjet recording system.

Line-type recording heads are known as recording heads for inkjet recording systems. Multi-pass inkjet printing and single-pass inkjet printing are also known as inkjet printing methods. The multi-pass inkjet printing is a method in which recording heads eject an inkjet ink (also referred to below as an "ink") onto a recording medium while reciprocating over the recording medium plural times. The single-pass inkjet printing is a method in which the recording heads eject the ink while moving over the recording medium only one time. The single-pass inkjet printing has the advantage in high-speed printing.

In response to a demand for high-speed printing, an image forming apparatus has been studied that includes the line-type recording heads and that adopts the single-pass inkjet printing. However, in image formation on a recording medium by the single-pass inkjet printing using the line-type recording heads, images cannot be overlaid on one another because the recording heads move over the recording medium only one time. Therefore, in a situation in which plain paper is used particularly as a recording medium, density of a formed image (copy density) tends to be low and ink tends to blur.

Furthermore, in image formation on a recording medium by the single-pass inkjet printing using the line-type recording heads, a phenomenon called strike through tends to occur. The strike through is a phenomenon in which ink excessively penetrates into a recording medium and a formed image is seen through on a surface (reverse surface) of the recording medium on which no image has been formed. As described above, in image formation on a recording medium by the single-pass inkjet printing using the line-type recording heads, quality of a formed image tends to be significantly inferior.

An ink containing a resin emulsion has been proposed in order to inhibit degradation of quality of formed images. In an example of such an ink containing a resin emulsion, through use of a resin emulsion having a lower acid value than a synthetic resin emulsion which is used in ordinary inks, an inkjet ink excellent in balance between chemical resistance and adhesion to a non-absorbent substrate can be obtained.

### SUMMARY

An inkjet ink according to an aspect of the present disclosure includes a pigment, first particles containing a first resin, second particles containing a second resin, and a moisturizing agent. The first resin includes a repeating unit derived from methyl methacrylate at a content percentage of at least 30% by mass and no greater than 70% by mass relative to all repeating units included in the first resin. The second resin has a content percentage of the repeating unit derived from methyl methacrylate of less than 30% by mass relative to all repeating units included in the second resin. The moisturizing agent includes an α,ω-alkanediol. Note that the α,ω-alkanediol in the present specification refers to an alkanediol having a carbon main chain (the longest carbon chain) including a hydroxy group at each terminal end thereof.

An inkjet recording system according to an aspect of the present disclosure includes an inkjet recording head and a conveyance section that conveys a recording medium. The inkjet recording head includes a plurality of nozzle arrays each extending in a direction perpendicular to a conveyance direction of the recording medium and having a plurality of nozzles. The nozzle arrays are arranged side by side in terms of the conveyance direction of the recording medium. In the inkjet recording system according to the present disclosure, the nozzles of the inkjet recording head eject the inkjet ink according to the present disclosure to form dots on the recording medium conveyed by the conveyance section.

### BRIEF DESCRIPTION OF THE DRAWINGS

FIG. 1 is a diagram illustrating a configuration of an inkjet recording system according to a preferable embodiment of the present disclosure.
FIG. 2 is a view of a conveyor belt of the inkjet recording system illustrated in FIG. 1 as viewed from above.
FIG. 3A is a diagram illustrating an ejection unit of a recording head illustrated in FIG. 2, and FIG. 3B is a cross-sectional view taken along line IIIB-IIIB in FIG. 3A.
FIG. 4 is a block diagram illustrating the configuration of the inkjet recording system according to the preferable embodiment of the present disclosure.

### DETAILED DESCRIPTION

The following describes preferable embodiments of the present disclosure. Terms used in the present specification will be described first. Values for volume median diameter (D₅₀) are values measured using a dynamic light scattering type particle size distribution analyzer ("ZETASIZER NANO ZS", product of Sysmex Corporation), unless otherwise stated. Acid values are values measured in accordance with "Japanese Industrial Standard (JIS) K0070-1992", unless otherwise stated. Values for mass average molecular weight (Mw) are values measured by gel permeation chromatography, unless otherwise stated.

### <First Embodiment: Ink>

The following describes an ink according to a first embodiment of the present disclosure. The ink according to the first embodiment contains a pigment, first particles containing a first resin, second particles containing a second resin, and a moisturizing agent. The first resin includes a repeating unit derived from methyl methacrylate (also referred to below as an MMA unit) at a content percentage of at least 30% by mass and no greater than 70% by mass relative to all repeating units included in the first resin. The second resin has a content percentage of the MMA unit of less than 30% by mass relative to all repeating units included in the second resin. Note that the content percentage of the MMA unit in the second resin may be 0% by mass. That is, the second resin may not include the MMA unit. The moisturizing agent includes an α,ω-alkanediol.

As a result of the ink according to the first embodiment having the above composition, excellent ejection stability can be ensured while copy density of an image formed on a recording medium using the ink can be increased. Presumably, the reason therefor is as follows. Note that copy density increases with an increase in ink retained on the surface of a recording medium.

The content percentage of the MMA unit in the first resin contained in the first particles is at least 30% by mass relative to all the repeating units in the first resin. The ink including the first particles such as above tends to remain on a paper surface. The content percentage of the MMA unit in the second resin contained in the second particles is less than 30% by mass relative to all the repeating units in the second resin. The ink including the second particles such as above tends to highly disperse a pigment. As a result of image formation using the ink according to the first embodiment, the ink which highly disperses a pigment tends to remain on a paper surface. Thus, copy density of an image formed on a recording medium can be increased with use of the ink according to the first embodiment.

In the ink according to the first embodiment, the content percentage of the MMA unit in the first resin contained in the first particles is no greater than 70% by mass relative to all the repeating units in the first resin. When the ink including the first particles such as above is used, nozzles tend to hardly dry. The ink according to the first embodiment contains a moisturizing agent including an α,ω-alkanediol. Hydrophilic portions (hydroxy groups) are arranged symmetrically in molecules of an α,ω-alkanediol. Therefore, the α,ω-alkanediol has a relatively large area in contact with water. For the reason as above, the α,ω-alkanediol is relatively highly hygroscopic. Thus, when the ink according to the first embodiment, which includes the first particles containing the first resin including the MMA unit of which content percentage is no greater than 70% by mass and a moisturizing agent including a relatively highly hygroscopic α,ω-alkanediol is used, nozzle drying can be inhibited and excellent ejection stability can be ensured.

The following describes components of the ink according to the first embodiment. A production method of the ink according to the first embodiment will be also described.

### [First Particles]

As described above, the first particles contain the first resin. In order to easily ensure excellent ejection stability while increasing copy density of an image formed on a recording medium using the ink, a resin having a mass average molecular weight (Mw) of at least 10,000 and no greater than 160,000 is suitable as the first resin. The first resin includes the MMA unit at a content percentage of at least 30% by mass and no greater than 70% by mass relative to all the repeating units in the first resin.

The mass average molecular weight (Mw) of the first resin can be adjusted by changing polymerization conditions for the first resin (specific examples include an amount of a polymerization initiator, a polymerization temperature, and a polymerization time). The amount of the polymerization initiator is preferably at least 0.001 mol and no greater than 5 mol relative to 1 mol of a monomer mixture, and more preferably at least 0.01 mol and no greater than 2 mol. Preferably, the polymerization temperature is 50°C or higher and 70°C or lower. The polymerization time is preferably 10 hours or longer and 24 hours or shorter.

The first particles of the ink according to the first embodiment may contain a resin other than the first resin. The content percentage of the first resin in the first particles is preferably at least 80% by mass relative to a total mass of the first particles, more preferably at least 90% by mass, and particularly preferably 100% by mass.

The first resin in the ink according to the first embodiment preferably includes a repeating unit derived from butyl acrylate (BA) (also referred to below as a BA unit) and a repeating unit derived from 2-ethylhexyl acrylate (2EHA) (also referred to below as a 2EHA unit) in addition to the MMA unit. The content percentage of the BA unit in the first resin is preferably at least 10% by mass and no greater than 50% by mass relative to all the repeating units in the first resin. The content percentage of the 2EHA unit in the first resin is preferably at least 10% by mass and no greater than 50% by mass relative to all the repeating units in the first resin.

In order to ensure excellent ejection stability while further increasing copy density of an image formed on a recording medium using the ink, the first particles preferably have a volume median diameter (D₅₀) of at least 30 nm and no greater than 200 nm, and more preferably at least 80 nm and no greater than 160 nm. In order to ensure excellent ejection stability while further increasing copy density of an image formed on a recording medium using the ink, the content percentage of the first particles in the ink is preferably at least 1% by mass and no greater than 10% by mass relative to a total mass of the ink. In order to ensure excellent ejection stability while further increasing copy density of an image formed on a recording medium using the ink, the first resin preferably includes only the MMA unit, the BA unit, and the 2EHA unit as the repeating units in the first resin.

### [Pigment]

Examples of pigments include yellow pigments, orange pigments, red pigments, blue pigments, violet pigments, and black pigments. Examples of yellow pigments include C. I. Pigment Yellow (74, 93, 95, 109, 110, 120, 128, 138, 139, 151, 154, 155, 173, 180, 185, or 193). Examples of orange pigments include C. I. Pigment Orange (34, 36, 43, 61, 63, or 71). Examples of red pigments include C. I. Pigment Red (122 or 202). Examples of blue pigments include C. I. Pigment Blue (15, more specifically, 15:3). Examples of violet pigments include C. I. Pigment Violet (19, 23, or 33). Examples of black pigments include C. I. Pigment Black (7).

The content percentage of the pigment in the ink is preferably at least 4% by mass and no greater than 8% by mass relative to the total mass of the ink. As a result of the content percentage of the pigment being at least 4% by mass, an image at a desired image density tends to be obtained. As a result of the content percentage of the pigment being no greater than 8% by mass, fluidity of the ink can be ensured. Therefore, an image at a desired image density can be easily obtained and permeability of the ink to a recording medium can be easily ensured.

In order to improve color density, hue, or stability of the ink, pigment particles constituting the pigment preferably have a volume median diameter (D₅₀) of at least 30 nm and no greater than 200 nm, and more preferably at least 70 nm and no greater than 130 nm.

### [Second Particles]

As described above, the second particles contain the second resin. The second resin has a content percentage of the MMA unit of less than 30% by mass relative to all the repeating units in the second resin. Preferably, the second particles cover each pigment particles constituting the pigment. In the above case, a film (layer) made from the second resin (also referred to below as a pigment dispersion resin) is formed on a surface of each of the pigment particles, with a result that agglomeration of the pigment particles can be inhibited. In a structure in which the second particles cover each pigment particle, the second resin (pigment dispersion resin) preferably has a content percentage of the MMA unit of no greater than 20% by mass relative to all the repeating units in the second resin in order to further inhibit agglomeration of the pigment particles. In a structure in which the second particles cover each pigment particle, the second particles are preferably anionic.

The second particles of the ink according to the first embodiment may contain a resin other than the second resin. The content percentage of the second resin in the second particles is preferably at least 80% by mass relative to a total mass of the second particles, and more preferably at least 90% by mass, and particularly preferably 100% by mass.

In order to ensure excellent ejection stability while further increasing copy density of an image formed on a recording medium using the ink, the second particles preferably have a volume median diameter (D₅₀) of at least 30 nm and no greater than 200 nm, and more preferably at least 80 nm and no greater than 150 nm. In order to ensure excellent ejection stability while further increasing copy density of an image formed on a recording medium using the ink, the content percentage of the second particles in the ink is preferably at least 1% by mass and no greater than 13% by mass relative to the total mass of the ink.

The second resin can be appropriately selected from known pigment dispersion resins, for example. Specific examples of the second resin include styrene-acrylic resins, styrene-maleic acid copolymers, vinylnaphthalene-acrylic acid copolymers, and vinylnaphthalene-maleic acid copolymers. Styrene-acrylic resins are resins including a repeating unit derived from styrene and a repeating unit derived from at least one monomer selected from acrylic acid, methacrylic acid, acrylic acid esters, and methacrylic acid esters. Examples of styrene-acrylic resins include styrene-acrylic acid-alkyl acrylate copolymers, styrene-methacrylic acid-alkyl methacrylate-alkyl acrylate copolymers, styrene-acrylic acid copolymers, styrene-maleic acid-alkyl acrylate copolymers, styrene-methacrylic acid copolymer, and styrene-alkyl methacrylate copolymers. Of the pigment dispersion resins listed above, styrene-acrylic resins are preferable in terms of easy preparation and excellent pigment dispersion effect. Styrene-methacrylic acid-alkyl methacrylate-alkyl acrylate copolymers are more preferable, and styrene-methacrylic acid-methyl methacrylate-butyl acrylate copolymers are particularly preferable.

The second resin preferably has an acid value of at least 100 mgKOH/g and no greater than 300 mgKOH/g. As a result of the second resin having an acid value within the above range, both dispersibility of the pigment and preservation stability of the ink can be increased.

The acid value of the second resin can be adjusted by changing type and amount of a monomer used in synthesis of the second resin. In an example of synthesis of the second resin, a monomer (specific examples include acrylic acid and methacrylic acid) having an acidic functional group (for example, a carboxy group) is used. The acid value of the second resin can be increased by increasing an amount of the monomer having an acidic functional group.

The second resin preferably has a mass average molecular weight (Mw) of at least 10,000 and no greater than 160,000. As a result of the second resin having a mass average molecular weight (Mw) within the above range, an image can be easily formed at a desired image density while an increase in ink viscosity can be suppressed.

The mass average molecular weight (Mw) of the second resin can be adjusted by changing polymerization conditions for the second resin (specific examples include an amount of a polymerization initiator, a polymerization temperature, and a polymerization time). The amount of the polymerization initiator is preferably at least 0.001 mol and no greater than 5 mol relative to 1 mol of a monomer mixture, and more preferably at least 0.01 mol and no greater than 2 mol. Preferably, the polymerization temperature is 50°C or higher and 70°C or lower. The polymerization time is preferably 10 hours or longer and 24 hours or shorter.

The amount of the second resin is preferably at least 15 parts by mass and no greater than 100 parts by mass relative to 100 parts by mass of the pigment. As a result of the amount of the second resin being at least 15 parts by mass relative to 100 parts by mass of the pigment, strike through in a recording medium after image formation can be inhibited. By contrast, as a result of the amount of the second resin being no greater than 100 parts by mass relative to 100 parts by mass of the pigment, the ink tends to spread over a recording medium, and thus, an image can be easily formed at a desired image density.

### [Pigment Dispersions]

The pigment described above and the second particles containing the second resin (pigment dispersion resin) described above may constitute pigment dispersions. The pigment dispersions are each preferably constituted by a pigment particle and the second particles (pigment dispersion resin) covering the pigment particle. That is, each pigment dispersion is preferably constituted by the pigment particle and a pigment dispersion resin layer (a film made from the second particles) that is present so as to cover a surface of the pigment particle. Note that a pigment dispersion resin (non-adsorbed resin) that is not adsorbed to the pigment particles may be present in the ink. The pigment dispersion resin that is adsorbed to the pigment particles preferably accounts for at least 95% by mass and no greater than 100% by mass of the pigment dispersion resin in the ink. The following describes a pigment dispersion production method.

### [Pigment Dispersion Production Method]

The pigment dispersions are obtained by covering the pigment particles with the pigment dispersion resin. Any known method can be used as the pigment dispersion production method. An example of preferable production methods is a method by which the pigment dispersions (specifically, a pigment dispersion liquid containing the pigment dispersions) are obtained through kneading the pigment and the second particles in an appropriate liquid medium such as water using a medium wet disperser such as NANO GRAIN MILL (product of Asada Iron Works Co., Ltd.), MSC MILL (product of Nippon Coke & Engineering Co., Ltd.), or "DYNO (registered Japanese trademark)-MILL" (product of Willy A. Bachofen AG (WAB). In treatment using a media type wet disperser, small-diameter beads are used, for example. Although no particular limitations are placed on the particle diameter of the beads, the beads preferably have for example a particle diameter of at least 0.5 mm and no greater than 1.0 mm. Although no particular limitations are placed on a material of the beads, the beads are preferably made from a hard material such as glass or zirconia.

The amount of the liquid medium used in pigment dispersion production is preferably at least 0.1 times and no greater than 5 times relative to a total mass of the pigment and the pigment dispersion resin, and more preferably at least 0.5 times and no greater than 4 times.

Dispersion conditions in pigment dispersion production are adjusted such that the pigment dispersions have a volume median diameter (D₅₀) of for example at least 70 nm and no greater than 130 nm (preferably, at least 80 nm and no greater than 120 nm). For example, a dispersion degree of the pigment and an amount of a portion of the resin that are not adsorbed (an amount of the pigment dispersion resin not covering the pigment particles) can be adjusted by changing the particle diameter of the beads. Specifically, the pigment dispersions can be micronized as the particle diameter of the beads is decreased. Also, the coverage of the pigment dispersion resin over the pigment particles can be increased as the particle diameter of the beads decreases.

The volume median diameter (D₅₀) of the pigment dispersions can be measured using a dynamic light scattering type particle size distribution analyzer ("ZETASIZER NANO ZS", product of Sysmex Corporation) for example for a solution obtained by diluting 300 times the pigment dispersion liquid containing the pigment dispersions with ion exchanged water.

### [Moisturizing Agent]

The ink according to the first embodiment contains a moisturizing agent including an α,ω-alkanediol. The content percentage of the α,ω-alkanediol in the ink according to the first embodiment is preferably at least 3.0% by mass and no greater than 30.0% by mass relative to the total mass of the ink, and more preferably at least 5.0% by mass and no greater than 20.0% by mass. When the content percentage of the α,ω-alkanediol is at least 3.0% by mass and no greater than 30.0% by mass, excellent ejection stability can be achieved and nozzle drying can be inhibited while copy density of an image formed on a recording medium using the ink can be increased.

The moisturizing agent preferably includes the α,ω-alkanediol at a content percentage of at least 5% by mass and no greater than 100% by mass relative to a total mass of the moisturizing agent. The moisturizing agent may include one α,ω-alkanediol independently or two or more alkanediols in combination.

In order to easily ensure excellent ejection stability while further increasing copy density, the α,ω-alkanediol preferably is at least one selected from the group consisting of 1,3-propanediol, 2-methyl-1,3-propanediol, 1,5-pentanediol, and 3-methyl-1,5-pentanediol, and a more preferable α,ω-alkanediol is 3-methyl-1,5-pentanediol. Hereinafter, at least one α,ω-alkanediol selected from the group consisting of 1,3-propanediol, 2-methyl-1,3-propanediol, 1,5-pentanediol, and 3-methyl-1,5-pentanediol may be referred to as a specific α,ω-alkanediol.

The specific α,ω-alkanediol has a viscosity and a boiling point that are not excessively high. Therefore, dry viscosity of the ink after evaporation of a volatile component contained in the ink through penetration of the ink in a recording medium can fall in a preferable range. With use of the ink such as above, which is excellent in permeability to a recording medium, nozzle drying can be inhibited and excellent ejection stability can be ensured while copy density can be further increased.

The moisturizing agent may further include an additional moisturizing agent besides the α,ω-alkanediol. Examples of the additional moisturizing agent include alkanetriol and glycol ether. One additional moisturizing agent may be used independently, or two or more of additional moisturizing agents may be used in combination.

### [Preferable Combination of First Resin and Moisturizing Agent]

In order to easily ensure excellent ejection stability while further increasing copy density of an image formed on a recording medium using the ink, the first resin includes only the MMA unit, the BA unit, and the 2EHA unit as the repeating units and the moisturizing agent includes 3-methyl-1,5-pentanediol.

### [Penetrating Agent]

The ink according to the first embodiment may further contain a penetrating agent. In order to increase permeability of the ink in a recording medium in a vertical direction (a thickness direction), a preferable penetrating agent is 1,2-octanediol. In order to further increase permeability of the ink in a recording medium in the vertical direction (the thickness direction), the content percentage of the penetrating agent is preferably at least 0.5% by mass and no greater than 1.0% by mass relative to the total mass of the ink.

At room temperature (for example, 25°C), 1,2-octanediol is in a liquid state. When a penetrating agent that is in a solid state at temperature in ink preparation (room temperature) is used, a portion of the penetrating agent tends to precipitate during evaporation of the volatile component of the ink from a recording medium in image formation. Precipitation as described above tends to inhibit penetration of the ink to a recording medium. Therefore, 1,2-octanediol, which is in a liquid state at room temperature (for example, 25°C), is preferably used as the penetrating agent.

### [Surfactant]

The ink according to the first embodiment may further contain a surfactant. The surfactant is used for a purpose of improving dispersion stability and compatibility of the components contained in the ink and for a purpose of increasing permeability of the ink to a recording medium (wettability). In order to further improve dispersion stability and compatibility of the components contained in the ink, a nonionic surfactant is preferable as the surfactant.

In a situation in which the ink according to the first embodiment contains a nonionic surfactant, the components of the ink hardly separate from the ink through the surfactant being inhibited from separating from the ink when the ink wets a recording medium and penetrates thereto. This can inhibit prior penetration of only a highly permeable liquid component of the ink. As a result, permeability of the ink as a whole to a recording medium and copy density of an image formed on the recording medium using the ink can be increased while nozzle drying can be inhibited and excellent ejection stability can be ensured.

Examples of preferable nonionic surfactants include polyalkylene glycol alkyl ether acrylate-alkyl acrylate-polyalkylene glycol acrylate-lauryl acrylate-alkyl methacrylate copolymers, and polyethylene glycol methyl ether acrylate-butyl acrylate-polypropylene glycol acrylate-lauryl acrylate-methyl methacrylate copolymers are more preferable.

In order to obtain an image at desired copy density while preventing occurrence of convex curling of a recording medium on which an image has been formed using the ink, the amount of the surfactant is preferably at least 0.3% by mass and no greater than 0.8% by mass relative to the total mass of the ink.

### [Additional Components]

The ink according to the first embodiment may contain any known additives (specific examples include a solution stabilizer, an anti-drying agent, an antioxidant, a viscosity modifier, a pH adjuster, and an antifungal agent) as necessary as additional components that are different from the above-described components. The solution stabilizer is used for a purpose of compatibilizing the components of the ink to stabilize a dissolved state of the components in the ink. Examples of solution stabilizers include 2-pyrrolidone, N-methyl-2-pyrrolidone, and γ-butyrolactone. Any one of the solution stabilizers listed above may be used independently, or any two or more of the solution stabilizers listed above may be used in combination. In a situation in which the ink contains a solution stabilizer, the content percentage of the solution stabilizer is preferably at least 1.0% by mass and no greater than 20.0% by mass relative to the total mass of the ink, and more preferably at least 2.0% by mass and no greater than 15.0% by mass.

In a situation in which the ink according to the first embodiment contains an anti-drying agent, glycerin is preferable as the anti-drying agent.

A preferable ink as the ink according to the first embodiment is an ink containing water (water-based ink). In a situation in which the ink according to the first embodiment is a water-based ink, the content percentage of the water in the ink is preferably at least 20% by mass and no greater than 90% by mass relative to the total mass of the ink, and more preferably at least 25% by mass and no greater than 80% by mass.

### [Ink Production Method]

No particular limitations are placed on a production method of the ink according to the first embodiment so long as uniform mixing of the pigment, the first particles, the second particles, the moisturizing agent, and the additional components, which are added as necessary, can be achieved. A specific example of the ink production method is a method in which the components of the ink are stirred using a stirrer for uniform mixing and foreign substances and coarse particles are removed using a filter (for example, a filter having a pore size of no greater than 5 µm).

The ink according to the first embodiment has been described so far. With use of the ink according to the first embodiment, excellent ejection stability can be ensured while copy density of an image formed on a recording medium using the ink can be increased.

### <Second Embodiment: Inkjet Recording System>

The following describes an inkjet recording system according to a second embodiment of the present disclosure. The inkjet recording system according to the second embodiment includes a conveyance section that conveys a recording medium and an inkjet recording head (also referred to below as a recording head"). The inkjet recording system according to the second embodiment uses the ink according to the first embodiment. The following describes the inkjet recording system according to the second embodiment with reference to the drawings. The drawings schematically illustrate elements of configuration in order to facilitate understanding. Properties of elements of configurations illustrated in the drawings, such as size and the number of each element of configuration, may differ from reality in order to facilitate preparation of the drawings.

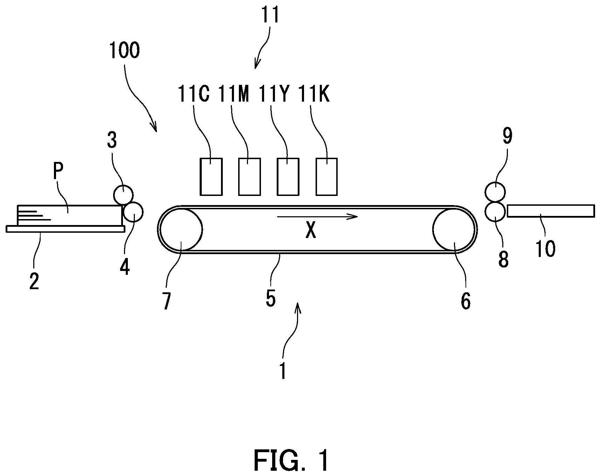

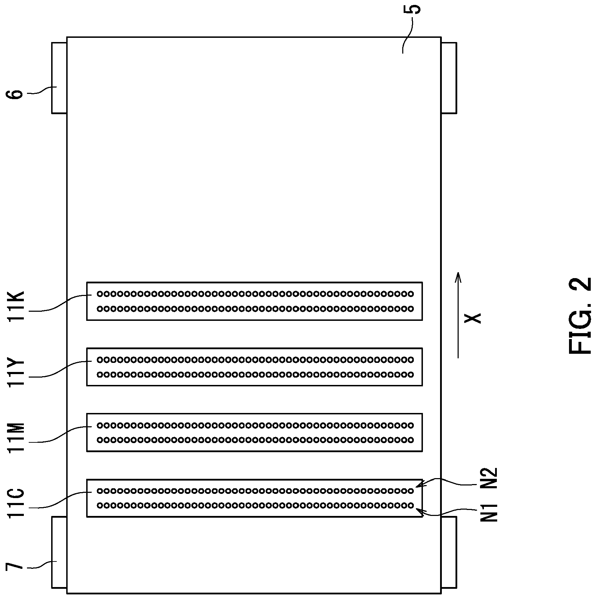

FIG. 1 is a diagram illustrating a configuration of an inkjet recording system 100. FIG. 2 is a view of a conveyor belt 5 in the inkjet recording system 100 illustrated in FIG. 1 as viewed from above.

As illustrated in FIG. 1, the inkjet recording system 100 is an inkjet recording apparatus including a conveyance section 1 and a recording head 11. The inkjet recording system 100 further includes a paper feed tray 2, a paper feed roller 3, a paper feed driven roller 4, a conveyor belt 5, a belt drive roller 6, a belt driven roller 7, an ejection roller 8, an ejection driven roller 9, and an exit tray 10. The conveyor belt 5, the belt drive roller 6, and the belt driven roller 7 constitute a part of the conveyance section 1. The paper feed tray 2 is provided at a left end of the inkjet recording system 100 in the drawing. Sheets of recording paper P (recording mediums) are loaded on the paper feed tray 2. The paper feed roller 3 and the paper feed driven roller 4 are disposed at one end of the paper feed tray 2. The paper feed roller 3 picks up sheets of the recording paper P loaded on the paper feed tray 2 one at a time in order from the topmost sheet of the recording paper P and feeds and conveys the recording paper P to the conveyor belt (conveyance section) 5. The paper feed driven roller 4 is in pressure contact with the paper feed roller 3 to passively rotate.

The conveyor belt 5 is disposed downstream of the paper feed roller 3 and the paper feed driven roller 4 in terms of a paper conveyance direction (rightward in FIG. 1) in a circulatable manner. The conveyor belt 5 is wound between the belt drive roller 6 and the belt driven roller 7. The belt drive roller 6 is disposed downstream in terms of the paper conveyance direction. The belt drive roller 6 drives the conveyor belt 5. The belt driven roller 7 is disposed upstream in terms of the paper conveyance direction. Rotation of the belt drive roller 6 rotates the belt driven roller 7 through circulation of the conveyor belt 5. Rotational driving in a clockwise direction of the belt drive roller 6 conveys the recording paper P in a conveyance direction X indicated by an arrow.

The ejection roller 8 and the ejection driven roller 9 are disposed downstream of the conveyor belt 5 in terms of the paper conveyance direction. The ejection roller 8 is driven in a clockwise direction in the drawing to eject the recording paper P with an image recorded thereon out of an apparatus casing of the inkjet recording system 100. The ejection driven roller 9 is in pressure contact with an upper part of the ejection roller 8 to be rotationally driven. The exit tray 10 is disposed downstream of the ejection roller 8 and the ejection driven roller 9. The recording paper P ejected out of the apparatus casing is placed on the exit tray 10.

The recording head 11 includes recording heads 11C, 11M, 11Y, and 11K. The recording heads 11C, 11M, 11Y, and 11K are disposed above the conveyor belt 5 in the stated order from upstream to downstream in terms of the conveyance direction X of the recording paper P. Each of the recording heads 11C, 11M, 11Y, and 11K (also referred collectively to below as recording heads 11C to 11K) is supported at a height with a specific distance from the upper surface of the conveyor belt 5. Each of the recording heads 11C to 11K records an image on the recording paper P placed on and conveyed by the conveyor belt 5. The recording heads 11C to 11K are loaded with respective inks in four different colors (cyan color, magenta color, yellow color, and black color). Ejection of the inks from the respective recording heads 11C to 11K results in formation of a color image on the recording paper P.

As illustrated in FIG. 2, each of the recording heads 11C to 11K extends in a direction (up-and-down direction in FIG. 2) perpendicular to the conveyance direction X of the recording paper P. Each of the recording heads 11C to 11K includes a plurality of nozzles arranged in nozzle arrays N1 and N2 each extending in the direction perpendicular to the conveyance direction X of the recording paper P. The nozzle arrays N1 and N2 are arranged side by side in terms of the conveyance direction X of the recording paper P. The recording heads 11C to 11K are also called line-type recording heads or long inkjet recording heads. The recording heads 11C to 11K each have a recording region having a width equal to or larger than the width of the conveyed recording paper P. The nozzles in each of the nozzle arrays N1 and N2 can record one line of an image at one time on the recording paper P placed on and conveyed by the conveyor belt 5.

Note that the inkjet recording system 100 according to the second embodiment includes the recording heads 11C to 11K in which the nozzles are arranged in a longitudinal direction of the main bodies of the recording heads 11C to 11K so that the width of the recording regions of the recording heads 11C to 11K are equal to or larger than the width of the recording paper P. However, the inkjet recording system 100 may include for example a plurality of short recording heads that each include a plurality of nozzles and that are arranged side by side in terms of the width direction of the conveyor belt 5 so that an image can be recorded over the entire span of the conveyed recording paper P in the width direction thereof.

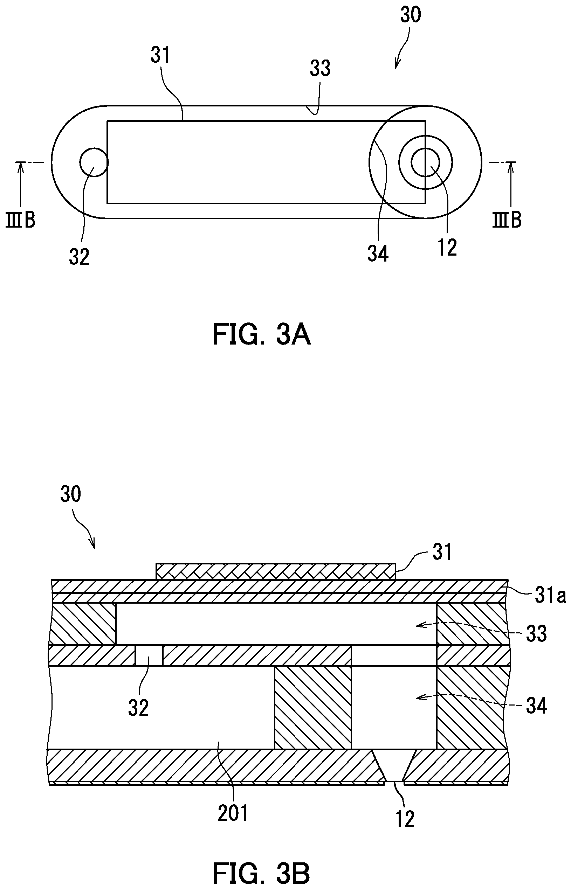

The following describes a configuration of an ejection unit 30 provided in each of the recording heads 11C to 11K with reference to FIGS. 3A and 3B. FIG. 3A is a diagram illustrating the ejection unit 30, and FIG. 3B is a cross-sectional view taken along line IIIB-IIIB in FIG. 3A.

As illustrated in FIGS 3A and 3B, the ejection unit 30 includes a nozzle 12, an actuator 31, a diaphragm 31a, a hole 32, a pressure chamber 33, and a nozzle flow channel 34. The hole 32, the pressure chamber 33, the nozzle flow channel 34, and the nozzle 12 communicate with one another. The pressure chamber 33 communicates with a common flow channel 201 through the hole 32. An ink is supplied from a non-illustrated ink tank to the common flow channel 201 for example by a pump.

The actuator 31 includes for example a piezoelectric element. Voltage application to the piezoelectric element (actuator 31) deforms the piezoelectric element by inverse piezoelectric effect. Deformation of the piezoelectric element propagates to the pressure chamber 33 through the diaphragm 31a. In this manner, the pressure chamber 33 is compressed. Ink sent to the pressure chamber 33 from the common flow channel 201 through the hole 32 is pressurized in the pressure chamber 33 by the actuator 31 to be ejected from the nozzle 12 through the nozzle flow channel 34.

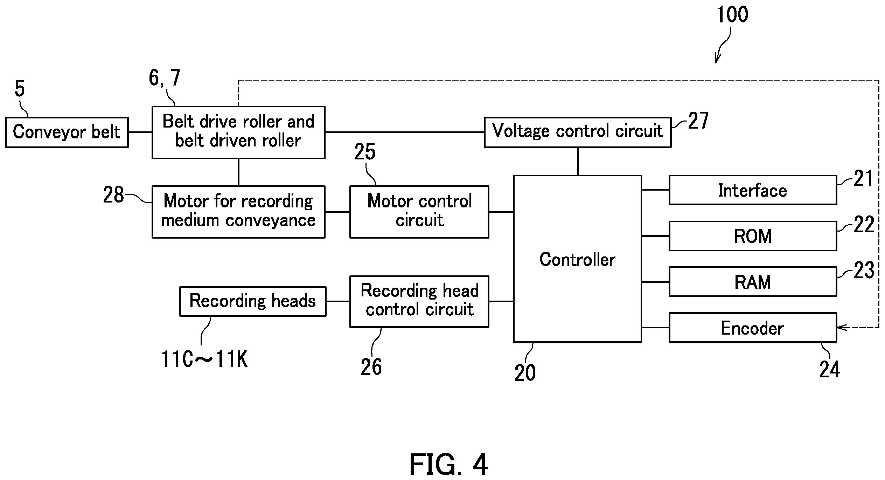

FIG. 4 is a block diagram illustrating the configuration of the inkjet recording system 100 according to the second embodiment. Elements common to those in FIGS. 1 and 2 are labelled using the same reference signs, and explanation thereof is omitted. The inkjet recording system 100 further includes a controller 20, an interface 21, read-only memory (ROM) 22, random-access memory (RAM) 23, an encoder 24, a motor control circuit 25, a recording head control circuit 26, a voltage control circuit 27, and a motor 28 for recording medium conveyance. The controller 20 is connected to the interface 21, the ROM 22, the RAM 23, the encoder 24, the motor control circuit 25, the recording head control circuit 26, and the voltage control circuit 27.

Data transmission and receipt to and from for example a host device such as a personal computer are performed through the interface 21. The controller 20 performs either or both scaling processing and tone processing as necessary on an image signal received through the interface 21, and converts the image signal to image data. The controller 20 then outputs a control signal to the respective control circuits described later.

The ROM 22 stores therein a control program for example used for driving the recording heads 11C to 11K for image recording. The RAM 23 stores in a specific region thereof the image data on which either or both the scaling processing and the tone processing have been performed by the controller 20.

The encoder 24 is connected to the belt drive roller 6. The encoder 24 outputs (transmits) a pulse train to the controller 20 according to an amount of rotational displacement of a rotary shaft of the belt drive roller 6. The controller 20 calculates a rotation amount by counting the number of pulses transmitted from the encoder 24 to grasp a feed amount (paper position) of the recording paper P. The controller 20 outputs a control signal to the motor control circuit 25 and the recording head control circuit 26 based on a signal from the encoder 24.

The motor control circuit 25 drives the motor 28 for recording medium conveyance in response to the output signal from the controller 20. Upon the motor 28 for recording medium conveyance being driven, the belt drive roller 6 rotates.

The recording head control circuit 26 transmits the image data stored in the RAM 23 to the recording heads 11C to 11K based on the output signal from the controller 20. The recording head control circuit 26 controls ink ejection by the recording heads 11C to 11K based on the transmitted image data. Through ink ejection control on the recording heads 11C to 11K by the recording head control circuit 26 and conveyance control on the recording paper P by the motor control circuit 25, recording processing is performed on the recording paper P.

The voltage control circuit 27 applies voltage to the belt driven roller 7 located on a side from which the recording paper P is fed based on the output signal from the controller 20 to generate an alternating electric field. The generated alternating electric field causes the recording paper P to electrostatically attach to the conveyor belt 5. Electrostatic attachment of the recording paper P is released by grounding the belt driven roller 7 or the belt drive roller 6 based on the output signal from the controller 20. Note that voltage is applied to the belt driven roller 7 in the second embodiment. However, the voltage may be applied to the belt drive roller 6.

In the inkjet recording system 100 according to the second embodiment, as illustrated in FIG. 2, the two nozzle arrays N1 and N2 are arranged side by side in terms of the conveyance direction X of the recording paper P (left-right direction in FIG. 2) in each of the recording heads 11C to 11K. The nozzles in the two nozzle arrays N1 and N2 arranged side by side in terms of the conveyance direction X eject the ink according to the first embodiment to form dots on the recording paper P conveyed by the conveyor belt 5.

The inkjet recording system according to the second embodiment has been described so far. The inkjet recording system according to the second embodiment uses the ink according to the first embodiment. Therefore, copy density of an image formed on the recording medium can be increased and excellent ejection stability can be ensured even in image formation by the single-pass inkjet printing using a line-type recording head.

The inkjet recording system according to the second embodiment has been described so far. However, the present disclosure is not limited to the second embodiment. Various alterations such as described below may be made in practice for example.

The second embodiment describes an inkjet recording apparatus including the recording heads 11C to 11K for the four inks different in color as an example. However, the present disclosure is applicable to a monochrome inkjet recording apparatus including a single recording head. The present disclosure is applicable also to a multifunction peripheral. The multifunction peripheral has functions of for example a scanner, a copier, a printer, and a facsimile machine. The ink of the present disclosure may be used for a purpose other than image formation (e.g., for data recording).

The number of the nozzles forming each of the nozzle arrays N1 and N2 and nozzle intervals can be set as appropriate according to specifications of an apparatus including the nozzles.

Although the two nozzle arrays N1 and N2 are arranged side by side in terms of the conveyance direction X in the second embodiment, it is possible in the present disclosure that three or more nozzle arrays are arranged side by side to sequentially perform dot array formation. The larger the number of the nozzle arrays is, the less frequently defective dots appear in formed dot arrays. Thus, a white line resulting from formation of defective dots is hardly conspicuous.

### [Examples]

Hereinafter, examples of the present disclosure will be described. However, the present disclosure is not limited to the following examples.

### <Preparation Method of Pigment Dispersion Liquid L1>

A 0.6-L vessel was charged with a pigment ("LIONOL (registered Japanese trademark) BLUE FG-7330", product of TOYOCOLOR CO., LTD., component: copper phthalocyanine, color index: Pigment Blue 15:3), later-described resin particles A, an ethylene oxide adduct of acetylenediol ("OLFINE (registered Japanese trademark) E1010", product of Nissin Chemical Industry Co., Ltd), and ion exchanged water at a ratio shown in Table 1 below. Subsequently, the solid raw materials in the vessel were dispersed in the ion exchanged water using a media type wet disperser ("DYNO (registered Japanese trademark)-MILL", product of Willy A. Bachofen AG (WAB)).

**[Table 1]**

| Raw materials of pigment dispersion liquid L1 | Content percentage (% by mass) |
|---|---|
| Pigment | 15.0 |
| Resin particles A | 6.0 |
| OLFINE E1010 | 0.5 |
| Ion exchanged water | 78.5 |
| Total | 100.0 |

As the resin particles A, resin particles having a volume median diameter (D₅₀) of 100 nm were used which were constituted by an alkaline soluble resin (a resin corresponding to the second resin) obtained by neutralizing a methacrylate (MAA)-methyl methacrylate (MMA)-butyl acrylate (BA)-styrene (ST) copolymer (mass average molecular weight (Mw) 20,000, acid value 100 mgKOH/g) with potassium hydroxide. The resin particles A were anionic. In the resin constituting the resin particles A, a mass ratio of a repeating unit derived from MAA, a repeating unit derived from MMA, a repeating unit derived from BA, and a repeating unit derived from ST (MAA unit/MMA unit/BA unit/ST unit) was 40/15/30/15.

Note that the above neutralization using potassium hydroxide was carried out through neutralization with equivalent amounts using a KOH solution (concentration of KOH: 105% by mass). A mass of the KOH added was calculated based on the amount of the copolymer for neutralization. Note that ion exchanged water in Table 1 includes water contained in the KOH solution and water generated through neutralization reaction.

Subsequently, a medium (zirconia beads) was loaded into a vessel and dispersion conditions were adjusted so that the resultant pigment dispersions had a desired volume median diameter (D₅₀). Specifically, the medium (zirconia beads having a particle diameter of 0.5 mm) was filled in the vessel up to 70% of the capacity of the vessel, and the solid raw materials in the vessel were further dispersed in the ion exchanged water while being cooled under conditions of a temperature of 10°C and a peripheral speed of 8 m/second. As a result of the above process, a pigment dispersion liquid L1 containing pigment dispersions having a volume median diameter (D₅₀) of 100 nm (pigment dispersions that were pigment particles each covered with the resin particles A) was obtained.

The volume median diameter (D₅₀) of the pigment dispersions was measured using a dynamic light scattering type particle size distribution analyzer ("ZETASIZER NANO ZS", product of Sysmex Corporation) for a solution as a measurement sample obtained by diluting the pigment dispersion liquid L1 300 times with ion exchanged water. In the measurement, 10 measurement samples were prepared; volume median diameters (D₅₀) of the respective 10 measurement samples were measured; and an arithmetic mean value of the measured ten values was taken to be a volume median diameter (D₅₀) of the pigment dispersions.

### <Ink Preparation Method>

### [Preparation of Resin Particles]

Resin particles P1 to P8 of types shown in Table 2 blow were prepared. The resin particles P1 to P8 of each type had a volume median diameter (D₅₀) of 110 nm. Note that values in a row titled "MMA unit" in Table 2 each indicate a content percentage (unit: % by mass) of a repeating unit derived from methyl methacrylate relative to all repeating units in a resin constituting corresponding resin particles. Values in a row titled "BA unit" each indicate a content percentage (unit: % by mass) of a repeating unit derived from butyl acrylate relative to all repeating units in a resin constituting corresponding resin particles. Values in a row titled "2EHA unit" each indicate a content percentage (unit: % by mass) of a repeating unit derived from 2-ethylhexyl acrylate relative to all repeating units in a resin constituting corresponding resin particles.

**[Table 2]**

| Resin particles | P1 | P2 | P3 | P4 | P5 | P6 | P7 | P8 |
|---|---|---|---|---|---|---|---|---|
| MMA unit | 0 | 10 | 25 | 30 | 50 | 70 | 75 | 80 |
| BA unit | 80 | 70 | 60 | 50 | 30 | 10 | 15 | 10 |
| 2EHA unit | 20 | 20 | 15 | 20 | 20 | 20 | 10 | 10 |

### [Preparation of Ink (A-1)]

### (Preparation of Resin Particle Emulsion)

A resin particle emulsion P4-1 was prepared by mixing 50 parts by mass of the resin particles P4, 5 parts by mass of a surfactant ("EMULGEN (registered Japanese trademark) 1135S-70", product of Kao Corporation"), and 45 parts by mass of ion exchanged water.

### (Mixing and Filtering)

Respective components shown in Table 3 below were loaded into a stirrer ("THREE-ONE MOTOR BL-600", product of Shinto Scientific Co., Ltd.) so as to give content percentages shown in Table 3, and mixed uniformly at a rotational speed of 400 rpm using the stirrer. Subsequently, the resultant liquid mixture was filtered through a filter having a pore size of 5 µm in order to remove foreign substances and coarse particles. As a result of the above processes, an ink (A-1) was obtained.

**[Table 3]**

| Raw material | Content percentage (% by mass) |
|---|---|
| Pigment dispersion liquid L1 | 40.0 |
| Resin particle emulsion P4-1 | 3.0 |
| 3-Methyl-1,5-pentanediol | 7.0 |
| 2- Pyrrolidone | 2.5 |
| Nonionic surfactant S1 | 0.5 |
| 1,2-Octanediol | 0.7 |
| Glycerin | 6.0 |
| Ion exchanged water | 40.3 |
| Total | 100.0 |

Note that a polyethylene glycol methyl ether acrylate (PEGA)-butyl acrylate (BA)-polypropylene glycol acrylate (PPGA)-lauryl acrylate (LA)-methyl methacrylate (MMA) copolymer was used as the nonionic surfactant S1 shown in Table 3. In the copolymer, the mass ratio among a repeating unit derived from PEGA, a repeating unit derived from BA, a repeating unit derived from PPGA, a repeating unit derived from LA, and a repeating unit derived from MMA (PEGA unit/BA unit/PPGA unit/LA unit/MMA unit) was 60/10/10/12/8. The nonionic surfactant S1 had a surface tension of 30.5 mN/m and a mass average molecular weight (Mw) of 5,000. The nonionic surfactant S1 was water-soluble. Note that the surface tension of the nonionic surfactant S1 was measured at a liquid temperature of 25°C by the Wilhelmy method using a surface tension measuring device ("CBVP-Z", product of Kyowa Interface Science Co., Ltd).

The mass average molecular weight (Mw) of the nonionic surfactant S1 was measured under the following conditions by gel permeation chromatography ("HLC-8020GPC", product of Tosoh Corporation). A calibration curve was plotted using n-propyl benzene and F-40, F-20, F-4, F-1, A-5000, A-2500, and A-1000 which each are a TSKgel standard polystyrene produced by Tosoh Corporation.

### (Conditions for Measurement of Mass Average Molecular Weight)

Column: "TSKgel SUPER MULTIPORE HZ-H", product of Tosoh Corporation (semi-micro column having a size of 4.6 mm (I. D.) × 15 cm)
Number of columns: 3
Eluent: Tetrahydrofuran
Flow rate: 0.35 mL/minute
Sample injection amount: 10 µL
Measurement temperature: 40°C
Detector: IR detector
[Preparation of Inks (A-2), (A-3), and (B-1) to (B-5)]

Inks (A-2), (A-3), and (B-1) to (B-5) were prepared by the same method as for the ink (A-1) in all aspects other than use of respective types of resin particles P1 to P3 and P5 to P8 shown in Table 4 below instead of the resin particles P4 in resin particle emulsion preparation. In preparation of a resin particle emulsion for each of the inks (A-2), (A-3), and (B-1) to (B-5), the amount of the resin particles was 50 parts by mass relative to 45 parts by mass of ion exchanged water.

### <Evaluation Methods>

With respect to each of the obtained inks (A-1) to (A-3), and (B-1) to (B-5), copy density and nozzle dryness (nozzle drying) were evaluated. The following describes methods for evaluating copy density and nozzle drying.

### [Method for Evaluating Copy Density]

An evaluation apparatus used was an inkjet recording apparatus (prototype evaluation apparatus produced by KYOCERA Document Solutions Inc.) having the configuration of the above-described inkjet recording system 100. The ink (evaluation ink) was loaded in a recording head of the evaluation apparatus. Subsequently, a solid image having a size of 10 cm by 10 cm was formed on a sheet of A4-size plain paper ("C²", product of Fuji Xerox Co., Ltd., plain paper copier (PPC) paper) in a normal-temperature and normal-humidity environment at a temperature of 25°C and a relative humidity of 60%. In the image formation, the amount of the ink per one drop ejected from the recording head was adjusted to 11 pL and the image was formed under the same conditions for each ink.

The plain paper with the solid image formed thereon was left to stand for 1 hour in a normal-temperature and normal-humidity environment at a temperature of 25°C and a relative humidity of 60%, and then, an image density of the formed solid image was measured using a reflectance densitometer ("RD-19", product of X-Rite Inc.). Image densities of 10 locations selected at random on the solid image were measured, and an arithmetic mean of the resultant measurement values was taken to be an evaluation value (copy density) of the evaluation ink. The ink was evaluated as good if the resultant copy density was equal to or higher than 1.20, and evaluated as poor if the resultant copy density was less than 1.20.

### [Method for Evaluating Nozzle Drying]

After the copy density was measured by the method described in the above section [Method for Evaluating Copy Density], nozzles of the evaluation apparatus were cleaned using a nozzle cleaning function of the evaluation apparatus in an environment at a temperature of 25°C and a relative humidity of 10%. Subsequently, the evaluation apparatus was left to stand for 1 hour in an environment at a temperature of 25°C and a relative humidity of 10%, and then, nozzle dryness (nozzle drying) of the nozzles of the evaluation apparatus was evaluated in accordance with the following standard. If an evaluation result was rated as A (good), ejection stability was evaluated as excellent. If an evaluation result was rated as B (poor), ejection stability was evaluated as not excellent.
A (good): Nozzle drying was inhibited and printing was enabled.
B (poor): Nozzle drying was not inhibited and printing was disabled.

Table 4 shows evaluation results of copy density and nozzle drying for each of the inks (A-1) to (A-3), and (B-1) to (B-5).

**[Table 4]**

| Ink | A-1 | A-2 | A-3 | B-1 | B-2 | B-3 | B-4 | B-5 |
|---|---|---|---|---|---|---|---|---|
| Resin particles | P4 | P5 | P6 | P1 | P2 | P3 | P7 | P8 |
| Copy density | 1.30 | 1.28 | 1.23 | 1.18 | 1.17 | 1.16 | 1.24 | 1.24 |
| Nozzle drying | A | A | A | A | A | A | B | B |

As shown in Tables 2 and 4, the resin particles P4 to P6 constituted by resins having a content percentage of the MMA unit of at least 30% by mass and no greater than 70% by mass (resins corresponding to the first resin) were used for the inks (A-1) to (A-3), respectively. For each of the inks (A-1) to (A-3), 3-methyl-1,5-pentanediol (α,ω-alkanediol) was used as a moisturizing agent. In each of the inks (A-1) to (A-3), copy density of a formed image was evaluated as good and nozzle drying was evaluated as good with a rating of A.

As shown in Tables 2 and 4, the resin particles P1 to P3 constituted by resins having a content percentage of a repeating unit derived from methyl methacrylate (MMA) of at least 0% by mass and no greater than 25% by mass were used for the inks (B-1) to (B-3), respectively. In each of the inks (B-1) to (B-3), nozzle drying was evaluated as good with a rating of A while copy density of a formed image was evaluated as poor.

As shown in Tables 2 and 4, the resin particles P7 and P8 constituted by resins having a content percentage of a repeating unit derived from methyl methacrylate (MMA) of at least 75% by mass and no greater than 80% by mass were used for the inks (B-4) and (B-5), respectively. In each of the inks (B-4) and (B-5), copy density of a formed image was evaluated as good while nozzle drying was evaluated as poor with a rating of B.

### [Evaluation for α,ω-Alkanediol as Moisturizing Agent]

Influences on copy density and nozzle drying were studied through change in type of α,ω-alkanediol as a moisturizing agent used in ink preparation. As shown in Table 5 below, 1,3-propanediol, 2-methyl-1,3-propanediol, 1,5-pentanediol, and 3-methyl-1,5-pentanediol were used as the α,ω-alkanediol. Examples in which alkanediols other than the above-listed α,ω-alkanediols were used were also evaluated. The alkanediols other than the above-listed α,ω-alkanediols were 1,2-pentanediol, 1,3-butanediol, 1,2-butanediol, and 1,2-propanediol (propylene glycol) as shown in Table 6 below. Note that the alkanediols shown in Tables 5 and 6 each are an alkanediol having relatively high solubility in water.

**[Table 5]**

| Type of α,ω-alkanediol | Abbreviation | Boiling point (°C) | Carbon number |
|---|---|---|---|
| 1,3-Propanediol | POD | 207 | 3 |
| 2-Methyl-1,3-propanediol | MPOD | 250 | 4 |
| 1,5-Pentanediol | PD | 197 | 5 |
| 3-Methyl-1,5-pentanediol | MPD | 206 | 6 |

**[Table 6]**

| Type of alkanediol other than α,ω-alkanediol | Abbreviation | Boiling point (°C) | Carbon number |
|---|---|---|---|
| 1,2-Pentanediol | 1,2-PG | 206 | 5 |
| 1,3-Butanediol | 1,3-BG | 207 | 4 |
| 1,2-Butanediol | 1,2-BG | 193 | 4 |
| 1,2-Propanediol | PG | 188 | 3 |

Inks having respective compositions shown in Table 7 below were prepared by the same method as for the ink (A-1) described above using the respective alkanediols shown in Tables 5 and 6. Alkanediol D shown in Table 7 is any of the alkanediols shown in Table 5 or 6. For each of the prepared inks (A-4) to (A-7) and (B-6) to (B-9), copy density and nozzle drying were evaluated. Methods for evaluating copy density and nozzle drying were the same as those for the inks (A-1) to (A-3) and (B-1) to (B-5). Results of evaluation of copy density and nozzle drying are shown in Table 8 below.

**[Table 7]**

| Raw material | Content percentage (% by mass) |
|---|---|
| Pigment dispersion liquid L1 | 40.0 |
| Resin particle emulsion P4-1 | 3.0 |
| Alkanediol D | 8.0 |
| 2- Pyrrolidone | 2.5 |
| Nonionic surfactant S1 | 0.5 |
| 1,2-Octanediol | 0.7 |
| Glycerin | 6.0 |
| Ion exchanged water | 39.3 |
| Total | 100.0 |

**[Table 8]**

| Ink | A-4 | A-5 | A-6 | A-7 | B-6 | B-7 | B-8 | B-9 |
|---|---|---|---|---|---|---|---|---|
| Alkanediol D | POD | MPOD | PD | MPD | 1,2-PG | 1,3-BG | 1,2-BG | PG |
| Copy density | 1.27 | 1.25 | 1.27 | 1.30 | 1.27 | 1.25 | 1.27 | 1.30 |
| Nozzle drying | A | A | A | A | B | B | B | B |

The copy density of an image formed using each of the inks (A-4) to (A-7) was a favorable value of at least 1.25 and nozzle drying was evaluated as good with a rating of A as shown in Table 8. By contrast, the inks (B-6) to (B-9) using the respective alkanediols other than the α,ω-alkanediols were evaluated as good in copy density of a formed image but evaluated as poor for nozzle drying with a rating of B.

The above results show that excellent ejection stability can be ensured while copy density of an image formed on a recording medium can be increased with use of the ink according to the present disclosure.

## Claims

1. An inkjet ink comprising a pigment, first particles containing a first resin, second particles containing a second resin, and a moisturizing agent, wherein
the first resin includes a repeating unit derived from methyl methacrylate at a content percentage of at least 30% by mass and no greater than 70% by mass relative to all repeating units included in the first resin,
the second resin has a content percentage of the repeating unit derived from methyl methacrylate of less than 30% by mass relative to all repeating units included in the second resin, and
the moisturizing agent includes an α,ω-alkanediol.

2. The inkjet ink according to claim 1, wherein
the α,ω-alkanediol is at least one alkanediol selected from the group consisting of 1,3-propanediol, 2-methyl-1,3-propanediol, 1,5-pentanediol, and 3-methyl-1,5-pentanediol.

3. The inkjet ink according to claim 1 or 2, wherein
a content percentage of the α,ω-alkanediol is at least 3.0% by mass and no greater than 30.0% by mass relative to a total mass of the inkjet ink.

4. The inkjet ink according to any one of claims 1 to 3, wherein
the first resin further includes a repeating unit derived from butyl acrylate and a repeating unit derived from 2-ethylhexyl acrylate.

5. The inkjet ink according to claim 4, wherein
a content percentage of the repeating unit derived from butyl acrylate in the first resin is at least 10% by mass and no greater than 50% by mass relative to all the repeating units in the first resin, and
a content percentage of the repeating unit derived from 2-ethylhexyl acrylate in the first resin is at least 10% by mass and no greater than 50% by mass relative to all the repeating units in the first resin.

6. The inkjet ink according to any one of claims 1 to 5, further comprising
a penetrating agent.

7. The inkjet ink according to any one of claims 1 to 6, further comprising
a surfactant.

8. The inkjet ink according to claim 7, wherein
the surfactant is a nonionic surfactant.

9. An inkjet recording system (100) comprising a conveyance section (1) configured to convey a recording medium (P) and an inkjet recording head (11), wherein
the inkjet recording head includes a plurality of nozzle arrays (N1, N2), the nozzle arrays each extending in a direction perpendicular to a conveyance direction of the recording medium and having a plurality of nozzles (12),
the nozzle arrays are arranged side by side in terms of the conveyance direction of the recording medium, and
the nozzles of the inkjet recording head eject the inkjet ink according to any one of claims 1 to 8 to form dots on the recording medium conveyed by the conveyance section.

## Patentansprüche

1. Tintenstrahltinte aufweisend ein Pigment, erste Partikel, die ein erstes Harz enthalten, zweite Partikel, die ein zweites Harz enthalten, und ein Befeuchtungsmittel, wobei
das erste Harz eine von Methylmethacrylat abgeleitete Wiederholungseinheit enthält, in einem prozentualen Anteil von mindestens 30 Masse-% und nicht mehr als 70 Masse-%, bezogen auf alle in dem ersten Harz enthaltenen Wiederholungseinheiten,
das zweite Harz einen prozentualen Anteil der von Methylmethacrylat abgeleiteten Wiederholungseinheit von weniger als 30 Masse-% hat, bezogen auf alle in dem zweiten Harz enthaltenen Wiederholungseinheiten, und
das Befeuchtungsmittel ein α,ω-alkandiol enthält.

2. Tintenstrahltinte nach Anspruch 1, wobei
das α,ω-Alkandiol mindestens ein Alkandiol ist, ausgewählt aus der Gruppe bestehend aus 1,3-Propandiol, 2-Methyl-1,3-Propandiol, 1,5-Pentandiol und 3-Methyl-1,5-Pentandiol.

3. Tintenstrahltinte nach Anspruch 1 oder 2, wobei
ein prozentualer Anteil des α,ω-Alkandiols mindestens 3,0 Masse-% und nicht mehr als 30,0 Masse-% beträgt, bezogen auf die Gesamtmasse der Tintenstrahltinte.

4. Tintenstrahltinte nach einem der Ansprüche 1 bis 3, wobei
das erste Harz ferner eine von Butylacrylat abgeleitete Wiederholungseinheit und eine von 2-Ethylhexylacrylat abgeleitete Wiederholungseinheit enthält.

5. Tintenstrahltinte nach Anspruch 4, wobei
ein prozentualer Anteil der von Butylacrylat abgeleiteten Wiederholungseinheit in dem ersten Harz mindestens 10 Masse-% und nicht mehr als 50 Masse-% beträgt, bezogen auf alle in dem ersten Harz enthaltenen Wiederholungseinheiten, und
ein prozentualer Anteil der von 2-Ethylhexylacrylat abgeleiteten Wiederholungseinheit in dem ersten Harz mindestens 10 Masse-% und nicht mehr als 50 Masse-% beträgt, bezogen auf alle in dem ersten Harz enthaltenen Wiederholungseinheiten

6. Tintenstrahltinte nach irgendeinem der Ansprüche 1 bis 5, ferner aufweisend
ein Penetriermittel.

7. Tintenstrahltinte nach irgendeinem der Ansprüche 1 bis 6, ferner aufweisend
ein Tensid.

8. Tintenstrahltinte nach Anspruch 7, wobei
das Tensid ein nichtionisches Tensid ist.

9. Tintenstrahlaufzeichnungssystem (100) aufweisend einem Transportabschnitt (1), der eingerichtet ist ein Aufzeichnungsmedium (P) und einen Tintenstrahlaufzeichnungskopf (11) zu transportieren, wobei
der Tintenstrahlaufzeichnungskopf eine Mehrzahl von Düsenanordnungen (N1, N2) enthält, die sich jeweils in einer Richtung senkrecht zu einer Transportrichtung des Aufzeichnungsmediums erstrecken und eine Mehrzahl von Düsen (12) aufweisen,
die Düsenanordnungen in Bezug auf die Transportrichtung des Aufzeichnungsmediums nebeneinander angeordnet sind, und
die Düsen des Tintenstrahlaufzeichnungskopfes die Tintenstrahltinte nach einem der Ansprüche 1 bis 8 ausstoßen, um auf dem von dem Transportabschnitt transportierten Aufzeichnungsmedium Punkte zu bilden.

## Revendications

1. Encre pour jet d'encre comprenant un pigment, des premières particules contenant une première résine, des deuxièmes particules contenant une deuxième résine, et un agent hydratant, dans laquelle :
la première résine contient un motif de répétition dérivé du méthacrylate de méthyle dans un pourcentage de teneur d'au moins 30 % en masse et qui ne dépasse pas 70 % en masse par rapport à l'ensemble des motifs de répétition contenus dans la première résine,
la deuxième résine a un pourcentage de teneur du motif de répétition dérivé du méthacrylate de méthyle de moins de 30 % en masse par rapport à l'ensemble des motifs de répétition contenus dans la deuxième résine, et
l'agent hydratant contient un α,ω-alcanediol.

2. Encre pour jet d'encre selon la revendication 1, dans laquelle
ledit α,ω-alcanediol est au moins un alcanediol choisi dans le groupe constitué par le 1,3-propanediol, le 2-méthyl-1,3-propanediol, le 1,5-pentanediol et le 3-méthyl-1,5-pentanediol.

3. Encre pour jet d'encre selon la revendication 1 ou 2, dans laquelle
un pourcentage de teneur dudit α,ω-alcanediol est d'au moins 3,0 % en masse et ne dépasse pas 30,0 % en masse par rapport à une masse totale de l'encre pour jet d'encre.

4. Encre pour jet d'encre selon l'une quelconque des revendications 1 à 3, dans laquelle
la première résine comprend en outre un motif de répétition dérivé de l'acrylate de butyle et un motif de répétition dérivé de l'acrylate de 2-éthylhexyle.

5. Encre pour jet d'encre selon la revendication 4, dans laquelle
un pourcentage de teneur du motif de répétition dérivé de l'acrylate de butyle dans la première résine est d'au moins 10 % en masse et ne dépasse pas 50 % en masse par rapport à l'ensemble des motifs de répétition dans la première résine, et
un pourcentage de teneur du motif de répétition dérivé de l'acrylate de 2-éthylhexyle dans la première résine est d'au moins 10 % en masse et ne dépasse pas 50 % en masse par rapport à l'ensemble des motifs de répétition dans la première résine.

6. Encre pour jet d'encre selon l'une quelconque des revendications 1 à 5, comprenant en outre
un agent pénétrant.

7. Encre pour jet d'encre selon l'une quelconque des revendications 1 à 6, comprenant en outre
un agent tensioactif.

8. Encre pour jet d'encre selon la revendication 7, dans laquelle
l'agent tensioactif est un agent tensioactif non ionique.

9. Système d'enregistrement à jet d'encre (100) comprenant une section de transport (1) configurée pour transporter un support d'enregistrement (P) et une tête d'enregistrement à jet d'encre (11), dans lequel
la tête d'enregistrement à jet d'encre comprend une pluralité d'assemblages de buses (N1, N2), les assemblages de buses s'étendant chacun dans une direction perpendiculaire à une direction de transport du support d'enregistrement et ayant une pluralité de buses (12),
les assemblages de buses sont disposés côte à côte en fonction de la direction de transport du support d'enregistrement, et
les buses de la tête d'enregistrement à jet d'encre éjectent l'encre à jet d'encre selon l'une quelconque des revendications 1 à 8 pour former des points sur le support d'enregistrement transporté par la section de transport.
